# EUROPEAN PATENT SPECIFICATION

(11) **EP 1 696 500 B1**
(45) Date of publication and mention of the grant of the patent: **07.05.2008**
(21) Application number: 06100779.5
(22) Date of filing: 24.01.2006
(51) Int. Cl.: H01M 8/04

(54) **Fuel cell**
Brennstoffzelle
Pile à combustible

(30) Priority: 24.02.2005 JP 2005048603
(43) Date of publication of application: 30.08.2006
(73) Proprietor: Kabushiki Kaisha Toshiba, Tokyo 105-8001 (JP)
(72) Inventor: Hisano, Taishi Toshiba Corporation IP-Division, 105-8001, Tokyo (JP)
(74) Representative: Henkel, Feiler & Hänzel

(56) References cited:
- EP-A- 1 625 634
- US-A1- 2003 124 398
- US-A1- 2003 196 913
- PATENT ABSTRACTS OF JAPAN vol. 2003, no. 12, 5 December 2003 (2003-12-05) & JP 2004 095376 A (YAMAHA MOTOR CO LTD), 25 March 2004 (2004-03-25)

## Description

The present invention relates to a fuel cell used as a power source for an electronic device, etc.

Presently, a secondary battery, e.g., a lithium ion battery, is mainly used as a power source for electronic devices, such as portable notebook personal computers (notebook PCs), mobile devices, etc. In recent years, high-output miniature fuel cells that require no charging are expected as novel power sources, based on a demand for increased power consumption and prolonged operating time that are required by enhanced functions of the electronic devices. Among various types of fuel cells, a direct methanol fuel cell (DMFC) that uses a methanol solution as its fuel can handle the fuel more easily and has a simpler system than fuel cells that use hydrogen as their fuel. Accordingly, the DMFC is noticed as a promising power source for the electronic devices.

As a fuel cell of this type, one that uses a dilution circulation system is proposed in, for example, Jpn. Pat. Appln. KOKAI Publication No. 2004-95376. What circulates in this system is a low-concentration aqueous methanol solution. High-concentration methanol is resupplied to compensate for the consumption of methanol by power generation, while water that is produced by chemical reaction is recovered to make up for water consumption. To attain this, a mixing tank is provided in which an aqueous methanol solution is produced by mixing the supplied high-concentration methanol and the water. An electromotive section has an anode and a cathode such that power generation is achieved by chemical reaction as diluted methanol and air are supplied to the anode and cathode sides, respectively.

In order to continue power generation without hindrance, the methanol concentration of the aqueous methanol solution that is supplied to the electromotive section must be kept within a given range. A concentration sensor is used to detect the methanol concentration. In general, the concentration sensor is set in a fuel supply line through which the methanol solution is supplied from the mixing tank to the electromotive section. Popular concentration sensors utilize the sound speed or refractive index of pulses that pass through a liquid.

During power generation, the aqueous methanol solution in the fuel supply line is heated to a temperature 60°C or more, so that it may contain bubbles in some cases. Possibly, moreover, dust may get into the fuel supply line for some reason. In these cases, the bubbles and the like sometimes may stagnate in the place where the concentration sensor is located. If this state lasts, accurate concentration detection cannot be achieved, so that power generation is hindered.

A technique described in Jpn. Pat. Appln. KOKAI Publication No. 2004-95376 is an example of a method of removing bubbles. If a result of calculation of the methanol concentration is not covered by a predetermined reference range, according to the method disclosed in this document, there is a possibility of bubbles adhering to the concentration sensor, so that the amount of action of a pump in the fuel supply line is changed.

According to the technique described in Jpn. Pat. Appln. KOKAI Publication No. 2004-95376, bubbles are removed by controlling the amount of pump action. The volume of the fuel supplied to an anode is also varied depending on the control of the pump action amount. Thus, there is a problem that the operation for removing the bubbles also influences the amount of power generation in the fuel cell, so that the amount of power generation is unstable.

A fuel cell according to an aspect of the invention is characterized by comprising: an electromotive section which generates electric power through a chemical reaction; a fuel tank which contains a fuel; a mixing tank in which the fuel supplied from the fuel tank is mixed with water obtained by condensing steam delivered from the electromotive section and an aqueous fuel solution to be supplied to the electromotive section is formed; a first line through which the fuel is circulated between the electromotive section and the mixing tank; a cooler which cools a product from the electromotive section and supplies the product to the mixing tank; a second line through which the aqueous fuel solution delivered from the mixing tank is refluxed to the mixing tank through a branch on the first line; a concentration sensor which is provided in the second line and detects a fuel concentration of the aqueous fuel solution in the second line; and a valve mechanism which is provided in that part of the second line which is situated between the concentration sensor and the first line and serves to stop a flow of the aqueous fuel solution in the second line.

This summary of the invention does not necessarily describe all necessary features so that the invention may also be a sub-combination of these described features.

The invention can be more fully understood from the following detailed description when taken in conjunction with the accompanying drawings, in which:
FIG. 1 is an exemplary perspective view showing a fuel cell according to an embodiment of the invention;
FIG. 2 is an exemplary perspective view showing the fuel cell connected to a personal computer;
FIG. 3 is an exemplary perspective view showing a power generation section of the fuel cell;
FIG. 4 is an exemplary system diagram mainly showing a configuration of the power generation section of the fuel cell;
FIG. 5 is an exemplary diagram typically showing a cell structure of an electromotive section of the fuel cell;
FIG. 6 is an exemplary diagram typically showing a concentration sensor and a fuel cooling section of the power generation section;
FIG. 7 is an exemplary sectional view schematically showing an anode cooler, a cathode cooler, and the fuel cooling section of the power generation section;
FIG. 8 is an exemplary diagram schematically showing the concentration sensor;
FIG. 9 shows exemplary characteristic curves representing relationships between the temperature, concentration, and sound speed of an aqueous methanol solution;
FIG. 10 is an exemplary view showing the relationship between a valve and a second line;
FIG. 11 is an exemplary sectional view corresponding to FIG. 10;
FIG. 12A is an exemplary side view showing the second line with the valve open;
FIG. 12B is an exemplary front view showing the second line with the valve open;
FIG. 13A is an exemplary side view showing the second line with the valve closed;
FIG. 13B is an exemplary front view showing the second line with the valve closed;
FIG. 14A is an exemplary front view showing a release mechanism with the valve open; and
FIG. 14B is an exemplary front view showing the release mechanism with the valve closed.

A fuel cell according to an embodiment of this invention will now be described in detail with reference to the accompanying drawings.

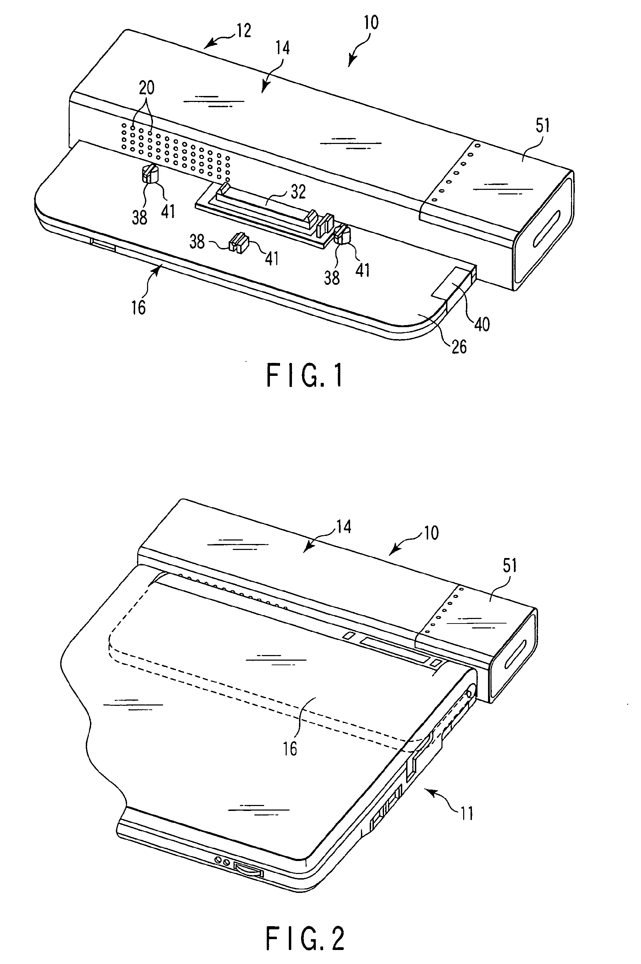

As shown in FIGS. 1 and 2, a fuel cell 10 is constructed as a DMFC that uses methanol as a liquid fuel and is usable as a power source for an electronic device, such as a personal computer 11.

The fuel cell 10 is provided with a case 12. The case 12 has a horizontally extending body 14 substantially in the form of a prism and a bearer portion 16 that extends from the body. The bearer portion 16, which is in the form of a flat rectangle, can carry a rear part of the computer 11. As described later, the body 14 contains therein a fuel tank, electromotive section, mixing tank, etc. A lock mechanism for locking the computer 11 and the like are located on the bearer portion 16.

As shown in FIG. 1, a connector 32 for connection with the personal computer 11 is provided on the upper surface of the bearer portion 16. A connector (not shown) for connection with the connector 32 of the fuel cell 10 is provided on a rear part of, for example, the bottom surface of the computer 11 and is connected mechanically and electrically to the connector 32. Positioning projections 41 and hooks 38 that constitute the lock mechanism are provided on three spots of the bearer portion 16. The positioning projections 41 and the hooks 38 engage the rear part of the bottom surface of the computer 11, thereby positioning and holding the computer 11 on the bearer portion 16. Further, the bearer portion 16 is provided with an eject button 40 that is used to unlock the lock mechanism in disengaging the computer 11 from the fuel cell 10. The bearer portion 16 has therein a control section for controlling the operation of a power generation section, which will be described later.

As shown in FIG. 1, a wall portion of the body 14 is formed with a number of vents 20. As described later, a fuel tank 50 that constitutes the power generation section is constructed as a removable fuel cartridge. One side portion of the body 14 is formed as a cover 51 that can be removed when the fuel tank 50 is detached.

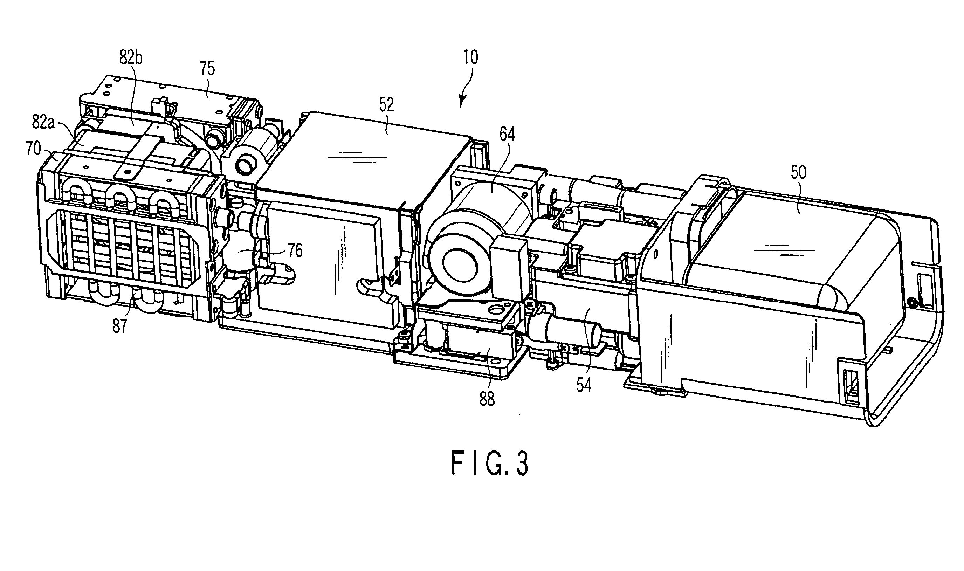

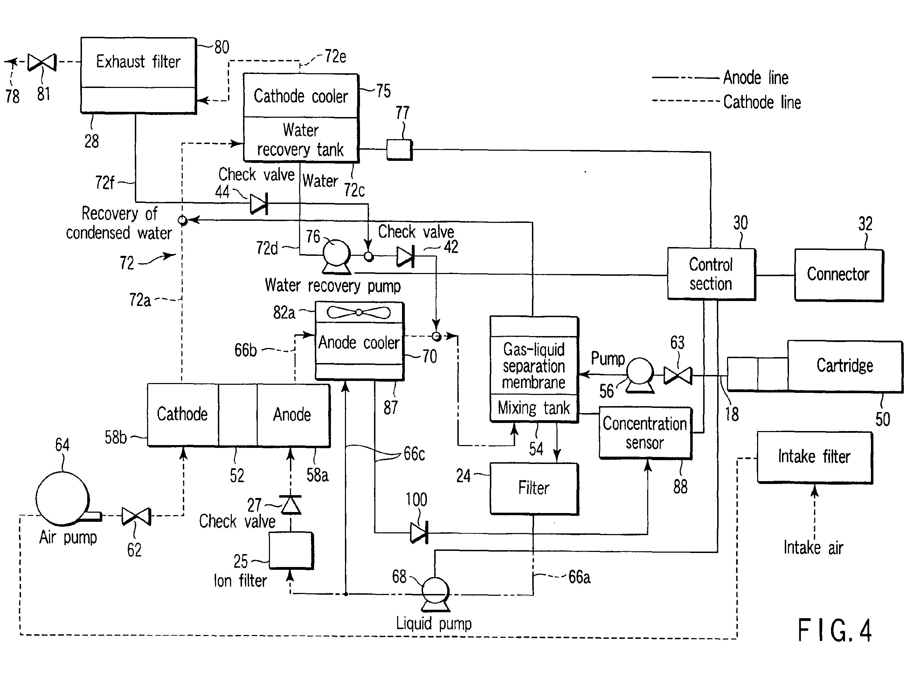

The configuration of the power generation section will now be described in detail. FIGS. 3 is a perspective view showing the power generation section, and FIG. 4 is a system diagram mainly showing the power generation section, especially details of an electromotive section 52 formed of a DMFC stack and accessories around it. As shown in FIGS. 3 and 4, the power generation section comprises the fuel tank 50, the electromotive section 52, a mixing tank 54, an anode cooler 70, and a cathode cooler 75. The fuel tank 50 is provided in one side portion of the body 14. The electromotive section 52 is located in the central part of the body 14 and performs power generation through a chemical reaction. The mixing tank 54 is disposed between the electromotive section and the fuel tank. The coolers 70 and 75 are arranged in the other side portion of the body. The fuel tank 50 contains high-concentration methanol for use as a liquid fuel. The tank 50 is formed as a cartridge that can be attached to and detached from the body 14.

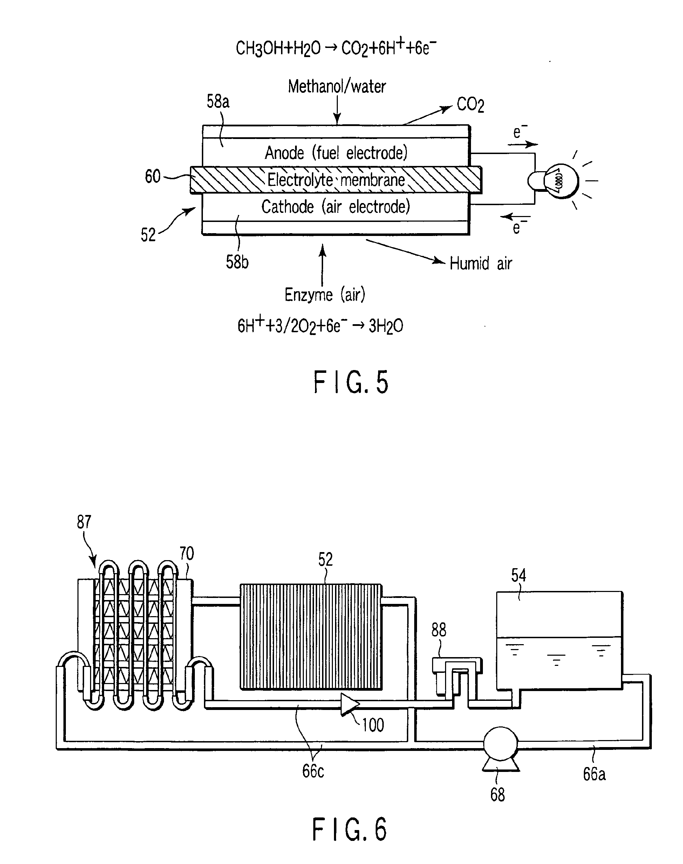

The fuel tank 50 is connected to the mixing tank 54 by a fuel supply line 18, which is provided with a first liquid pump 56, which feeds a fuel from the fuel tank into the mixing tank, and a solenoid valve 63. As shown in FIG. 5, the electromotive section 52 is formed by stacking cells in layers. Each cell is formed of an anode (fuel electrode) 58a, a cathode (air electrode) 58b, and an electrolyte membrane 60 sandwiched between the electrodes. A large number of cooling fins 61 are arranged around the electromotive section 52.

As shown in FIGS. 3 and 4, the body 14 contains therein an air pump 64, which supplies air to the cathode 58b of the electromotive section 52 through an air valve 62. The air pump 64 constitutes an air supply section. A fuel supply pipe 66a and a fuel recovery pipe 66b are connected between the electromotive section 52 and the mixing tank 54, and form a first line (anode line) through which the fuel is circulated between the anode 58a of the electromotive section and the tank 54. The fuel supply pipe 66a is connected with a filter 24, a second liquid pump 68, an ion filter 25, and a check valve 27. The pump 68 delivers the fuel from the mixing tank 54 to the electromotive section 52.

As shown in FIGS. 3, 4, 6 and 7, a number of vertically extending radiator fins 69 are mounted around the fuel recovery pipe 66b and constitute the anode cooler 70. Further, the anode cooler 70 has a first cooling fan 82a. The fan 82a draws cooling air into the body through its vents 20, thereby circulating the cooling air around the anode cooler 70 and then discharging it into the body.

As shown in FIGS. 3, 4 and 7, an exhaust pipe 72 is connected to the electromotive section 52 and forms a cathode line through which air and products of power generation are discharged from the cathode 58b. The cathode line has a first line 72a extending from the electromotive section 52, a plurality of branch lines 72b, a reservoir portion (water recovery tank) 72c, a first recovery line 72d, and a second line 72e. The branch lines 72b diverge from the first line 72a and extend individually at angles to the horizontal direction. The reservoir portion 72c communicates with the first line 72a and the respective lower ends of the branch lines 72b and stores water discharged from the first line and water condensed in the branch lines. The first recovery line 72d guides the water stored in the reservoir portion 72c into the mixing tank 54. The second line 72e opens into the respective upper ends of the branch lines 72b. In the present embodiment, the branch lines 72b individually extend in the vertical direction. Further, the first recovery line 72d communicates with the fuel recovery pipe 66b between the anode cooler 70 and the mixing tank 54, and is connected to the mixing tank by the fuel recovery line.

The first recovery line 72d is provided with a water recovery pump 76, which supplies the water in the reservoir portion 72c to the mixing tank 54. Further, the reservoir portion 72c contains therein a water level sensor 77 for detecting the level of the water stored in the reservoir portion.

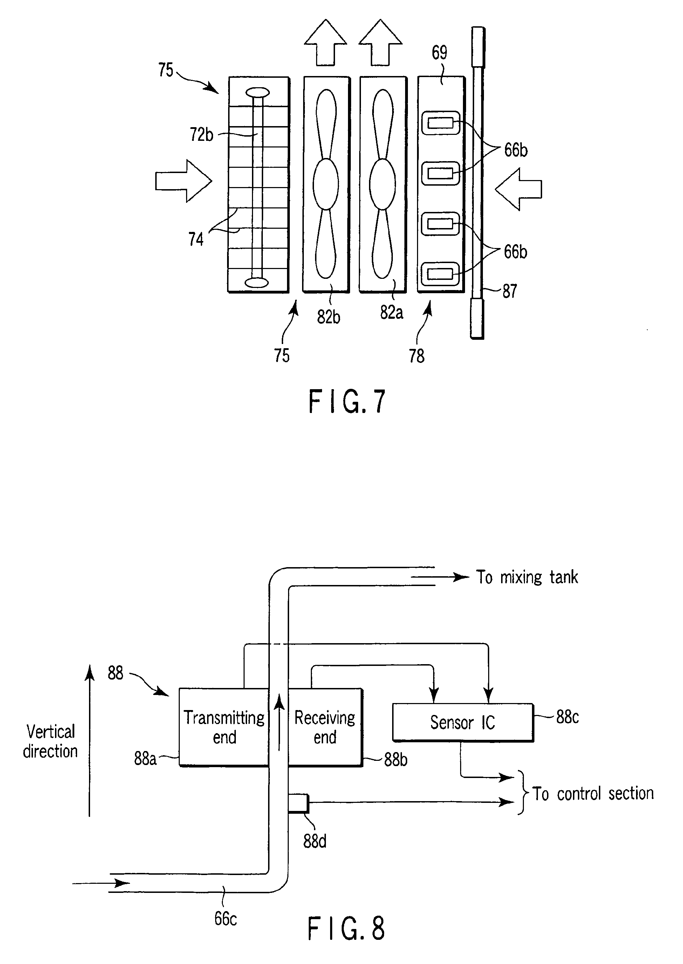

As shown in FIG. 7, a number of horizontally extending radiator fins 74 are mounted around the exhaust pipe 72 that defines the branch lines 72b, thus constituting a cathode cooler 75. The cathode cooler 75 that includes the branch lines 72b is opposed to the anode cooler 70 with a gap between the two. As shown in FIG. 4, the second line 72e extends substantially horizontally and is provided with an exhaust port 78 that opens toward a vent 22 in the body 14.

In the second line 72e, an exhaust filter 80 and an exhaust valve 81 are located near the exhaust port 78. The exhaust filter 80 is formed of, for example, a metal catalyst or the like and serves to remove toxic substances such as methanol in the air that is discharged through the cathode line. A water recovery portion 28 is provided vertically under the exhaust filter 80 and communicates with the second line 72e. Further, the cathode line has a second recovery line 72f through which the water recovered in the water recovery portion 28 is led to the first recovery line 72d. The second recovery line 72f is connected to the first recovery line 72d between the water recovery pump 76 and the mixing tank 54.

Between the water recovery pump 76 and the mixing tank 54, the first recovery line 72d is provided with a check valve 42 that restrains the water from flowing back from the mixing tank 54 toward the pump 76. Between the check valve 42 and the water recovery portion 28, the second recovery line 72f is provided with a check valve 44 that restrains the water from flowing back from the pump 76 to the water recovery portion 28.

In the body 14, as shown in FIG. 7, a second cooling fan 82b, a centrifugal fan, is located between the anode cooler 70 and the cathode cooler 75 so as to face the cathode cooler. The fan 82b sucks in cooling air through the vents of the body 14 and feeds the air into the body through the cathode cooler 75.

The power generation section is provided with a concentration sensor 88 for detecting the concentration of the fuel stored in the mixing tank 54 and a fuel cooling section 87 for cooling the fuel delivered to the concentration sensor. As shown in FIG. 3, the first and second liquid pumps 56 and 68, air pump 64, water recovery pump 76, air valve 62, exhaust valve 81, and cooling fans 82, which constitute the power generation section, are connected electrically to a control section 30 and controlled by the control section. Further, the water level sensor 77 and the concentration sensor 88 are connected to the control section 30 and individually output detection signals to the control section.

The following is a detailed description of the concentration sensor 88 and the fuel cooling section 87. Between the mixing tank 54 and the electromotive section 52, as shown in FIGS. 4 and 6, a branch pipe diverges from the fuel supply pipe 66a and forms a second line 66c through which an aqueous solution of methanol is refluxed into the mixing tank 54. The second line 66c is a dedicated line that serves for the detection of the methanol concentration of the methanol solution. The second line 66c is provided with the concentration sensor 88 that detects the fuel concentration of the methanol solution. The necessary amount of aqueous methanol solution for the concentration detection may be small or negligible when compared with the total amount of methanol solution used in the power generation section. Accordingly, the inside diameter of the second line 66c is smaller than that of the fuel supply pipe 66a, so that the amount of aqueous methanol solution that flows into the second line 66c is small. Thus, the fuel supply to the electromotive section 52 cannot be adversely affected.

Between the branch of the fuel supply pipe 66a and the concentration sensor 88, the second line 66c is provided with the fuel cooling section 87 that cools the aqueous methanol solution delivered to the sensor. The cooling section 87 is formed integrally with the anode cooler 70. A valve mechanism 100 is provided between the anode cooler 70 and the concentration sensor 88. The valve mechanism 100, which serves strongly to sweep away the bubbles in the second line 66c, is located on the upstream side of the sensor 88 in the second line 66c.

As shown in FIGS. 3, 6 and 7, it is formed by tucking a pipe like a bellows. Straight portions of the cooling section 87 are formed of a metal tube each, while bent portions are formed of an elastic silicone tube each. Further, the fuel cooling section 87 is adjacently opposed to the cooler 70. It is located in a line for a cooling air flow that is formed by the first cooling fan 82a so as to be situated on the upstream side of the anode cooler 70 with respect to the cooling air flow. More specifically, the fuel cooling section 87 integral with the anode cooler 70 is incorporated in the cooling air flow line of the anode cooler so that it can be cooled by utilizing the cooling capacity of the cooler. The methanol solution that flows through the second line 66c can be cooled to, for example, 40°C or less by the cooling section 87 as it is delivered to the concentration sensor 88. Thus, the concentration sensor 88 can be prevented from being adversely affected by heat. Since the bubbles contained in the fuel in the second line 66c are rushed away into the mixing tank 54 by the valve mechanism 100 (mentioned later), the influence of the bubbles on the concentration sensor 88 can be removed. The bubbles swept away into the mixing tank 54 can be separated from the fuel by a gas-liquid separation membrane that is located in the mixing tank.

As shown in FIG. 8, the concentration sensor 88 is attached to that part of the second line 66c in which the aqueous methanol solution flows against the force of gravity, that is, from bottom to top (e.g., in the vertical direction). In this line portion, bubbles and the like that are lower in specific gravity than methanol can easily pass up, and the probability of their stagnating in the middle of the line is low. If the bubbles or the like stagnate, moreover, they can be easily allowed to pass up by changing the flow of the methanol solution by the control mentioned later.

For example, a so-called sonic sensor is used as the concentration sensor 88. It may be replaced with sensors of any other types that can finally measure the methanol concentration. If the concentration sensor 88 is the sonic sensor, it has a transmitting end 88a, receiving end 88b, sensor IC 88c, and temperature sensor (thermistor) 88d, for example. The transmitting end 88a and the receiving end 88b are opposed to each other with the second line 66c between them.

The transmitting end 88a periodically sends given pulses to the receiving end 88b. The receiving end 88b receives the pulses sent from the transmitting end 88a. Based on the difference between the time for the transmission of the pulses from the transmitting end 88a and the time for the reception of the pulses by the receiving end 88b, the sensor IC 88c detects the sound speed at which the pulses pass through the aqueous methanol solution in the second line 66c. The sound speed tends to be low if the methanol concentration is high, and high if the methanol concentration is low. The control section 30 is notified of the result of the detection by the sensor IC 88c.

The temperature sensor 88d detects the temperature of aqueous methanol solution that flows through the second line 66c. It is known that the methanol concentration of the aqueous methanol solution changes depending on the temperature of the solution. Therefore, the temperature detected by the temperature sensor 88d is also used for the measurement of the methanol concentration. The control section 30 is notified of the result of the measurement by the sensor 88d.

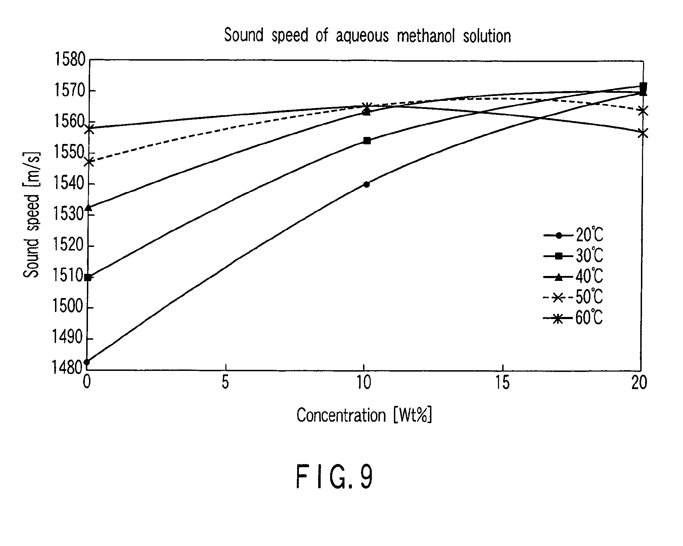

The control section 30 converts the measured sound speed value into a voltage/current value or the like and detects it. Further, it calculates the concentration of the aqueous methanol solution based on the temperature measured by the temperature sensor 88d. With respect to the relationship between the sound speed and the fuel concentration of the aqueous methanol solution, as shown in FIG. 9, the higher the solution temperature, the smaller the variation of the sound speed compared with the concentration is. Based on the correlation between the methanol concentration and the sound speed, the control section 30 obtains the methanol concentration from the measured sound speed. Further, the value of the methanol concentration is corrected according to the temperature measured by the temperature sensor 88d. This final methanol concentration calculation may be performed in the sensor IC 88c. Based on the aforesaid relationship, the temperature of the aqueous methanol solution measured by the concentration sensor 88 should preferably be, for example, 40°C or less at which adequate resolution can be obtained. According to the present embodiment, as described above, the aqueous methanol solution delivered to the concentration sensor 88 is cooled to 40°C or less by the cooling section 87. Thus, the methanol concentration can be detected with high resolution by the concentration sensor 88. If the methanol concentration is within a given range, the control section 30 controls fuel supply from the fuel tank 50 to the mixing tank 54 or water supply to the mixing tank, thereby keeping the temperature of the aqueous methanol solution in the mixing tank at a given value. Normally, the methanol concentration used for the fuel cell is 10% by weight, so that it can be controlled satisfactorily by setting a temperature for adequate resolution to 40°C or less.

If the fuel cell 10 constructed in this manner is used as the power source for the personal computer 11, the rear end portion of the computer is first placed on the bearer portion 16 of the fuel cell, locked in a predetermined position, and connected electrically to the fuel cell. In this state, a switch (not shown) is turned on to start power generation in the fuel cell 10.

In this case, high-concentration methanol is supplied from the fuel tank 50 to the mixing tank 54 by the first liquid pump 56 and mixed with water as a solvent refluxed from the electromotive section 52, whereby it is diluted to a given concentration. The aqueous methanol solution diluted in the mixing tank 54 is supplied through the anode line to the anode 58a of the electromotive section 52 by the second liquid pump 68. On the other hand, air is supplied to the cathode 58b of the electromotive section 52 by the air pump 64. As shown in FIG. 6, the supplied methanol and water chemically react with each other in the electrolyte membrane 60 between the anode 58a and the cathode 58b, whereupon electric power is generated between the anode and the cathode. The power generated in the electromotive section 52 is supplied to personal computer 11 through the control section 30 and the connector 32.

With the progress of the power generation reaction, carbon dioxide and water are produced as reaction products on the sides of the anode 58a and the cathode 58b, respectively, in the electromotive section 52. The carbon dioxide produced on the anode side and an unaffected portion of the methanol are delivered to the anode line, cooled through the anode cooler 70, and then refluxed into the mixing tank 54. The carbon dioxide is gasified in the mixing tank 54 and discharged to the outside through the cathode cooler 75, exhaust valve 81, and finally, the exhaust port 78.

Most of the water produced on the side of the cathode 58b is reduced to steam, which is discharged together with air into the cathode line. The discharged water and steam pass through the first line 72a, and the water is fed into the reservoir portion 72c. The steam and air flow upward through the branch lines 72b to the second line 72e. As this is done, the steam that flows through the branch lines 72b is cooled and condensed by the cathode cooler 75. The water produced by the condensation flows downward in the branch lines 72b by gravity and is recovered into the reservoir portion 72c. The water recovered in the reservoir portion 72c is delivered to the mixing tank 54 by the water recovery pump 76, mixed with the methanol, and supplied again to the electromotive section 52.

Some of the air and steam delivered to the second line 72e is fed into the water recovery portion 28. As this is done, the steam is condensed into water in the second line 72e, and the resulting water is recovered into the water recovery portion 28. The air and the methanol splashed in the air are delivered to the exhaust filter 80, whereupon the methanol is removed by the filter. The air passes through the exhaust valve 81 and is discharged into the body 14 through the exhaust port 78, and moreover, to the outside through the vents 20 of the body. The carbon dioxide discharged from the anode side of the electromotive section 52 passes through the second line 72e and is discharged into the body 14 through the exhaust port 78, and moreover, to the outside through the vents 20 of the body.

During the operation of the fuel cell 10, the first and second cooling fans 82a and 82b are driven so that the outside air is introduced into the body 14 through the vents 20 of the body. The outside air introduced into the body 14 through the vents 20 and the air in the body 14 pass around the fuel cooling section 87 and the anode cooler 70, thereby cooling them, and are then sucked in by the first cooling fan 82a. The outside air introduced into the body 14 by the second cooling fan 82b and the air in the body 14 pass around the cathode cooler 75, thereby cooling it, and are then sucked in by the second cooling fan 82b.

The air drawn in by the first and second cooling fans 82a and 82b is discharged through exhaust ports (not shown) of the cooling fans into the body 14, passes through the body 14, and is then discharged to the outside through the vent of the body. As this is done, the air discharged through the cooling fans 82a and 82b is mixed with air and carbon dioxide that are discharged through the exhaust port 78 of the cathode line, and the resulting mixture is discharged through the vent to the outside of the body. Further, the air discharged from the cooling fans 82a and 82b cools the electromotive section 52 and its surroundings and is then discharged to the outside of the body 14.

The concentration of the methanol in the mixing tank 54 is detected by the concentration sensor 88. Based on the detected concentration, the control section 30 actuates the water recovery pump 76 to supply the water in the reservoir portion 72c to the mixing tank 54, thereby keeping the methanol concentration constant. Further, the amount of water recovered in the cathode line, that is, the amount of condensed steam, is adjusted by controlling the cooling capacity of the cathode cooler 75, depending on the level of the water recovered in the reservoir portion 72c. In this case, the cooling capacity of the cathode cooler 75 is adjusted by controlling the driving voltage of the second cooling fan 82b according to the water level detected by the water level sensor 77. By doing this, the amount of water recovery is controlled.

As the water is recovered, the water recovery pump 76 is rotated forward by the control section 30. Thereupon, the check valve 42 opens, and the check valve 44 closes. The water in the reservoir portion 72c is delivered to the mixing tank 54 via the first recovery line 72d and the check valve 42.

The control section 30 drives the water recovery pump 76 for reverse rotation for a given time at every given operating period, whereupon the water collected in the water recovery portion 28 is recovered into the reservoir portion 72c. Thus, when the water recovery pump 76 is reversed, the check valve 44 opens, and the check valve 42 closes. The water collected in the water recovery portion 28 and the water produced by condensation in the second line 72e are recovered into the reservoir portion 72c through the second recovery line 72f, check valve 44, and the first recovery line 72d. Thereafter, the recovered water is supplied to the mixing tank 54 and used for the dilution of the methanol.

Thus, the aqueous methanol solution in the mixing tank 54 can be efficiently mixed and kept at a constant concentration.

The following is a detailed description of the way the valve mechanism 100 forces out the bubbles from the second line 66c.

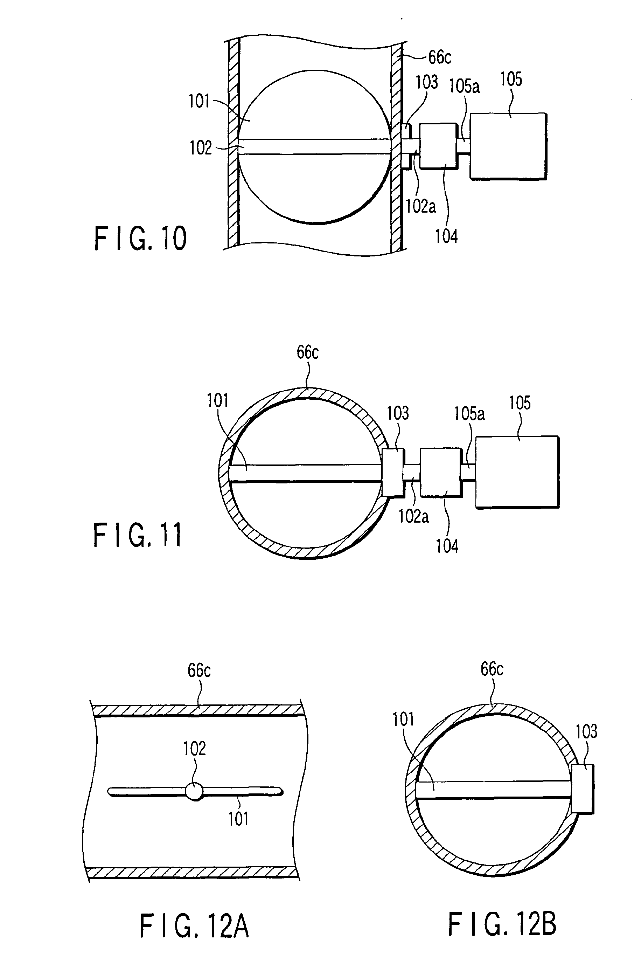

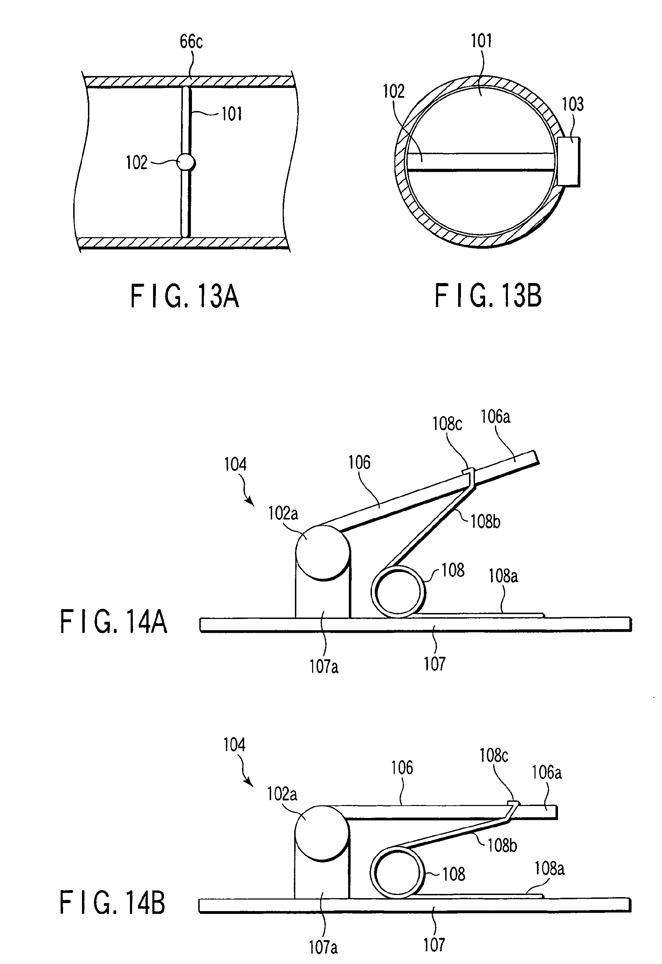

FIG. 10 is a view showing the relationship between a valve and the second line. FIG. 11 is a sectional view corresponding to FIG. 10. FIG. 12A is a side view showing the second line with the valve open. FIG. 12A is a side view showing the second line with the valve open. FIG. 12B is a front view showing the second line with the valve open. FIG. 13A is a side view showing the second line with the valve closed. FIG. 13B is a front view showing the second line with the valve closed.

As shown in FIGS. 10 and 11, a valve 101 is contained in the second line 66c. The valve 101 is in the form of a disk having a diameter a little smaller than the inside diameter of the second line 66c. The valve 101 is rotatable around a shaft 102 in the flowing direction of the fuel that flows in the second line 66c. As shown in FIGS. 12A, 12B and 13A, 13B, the valve 101 can rotate between an open state in which it allows the fuel to be refluxed in the second line 66c and a closed state in which the reflux of the fuel in the second line 66c is stopped. As shown in FIGS. 10 and 11, an end portion of the shaft 102 projects from the second line 66c through a bearing 103 and is inserted in a valve release portion 104. A shaft 105a of a valve control motor 105 is also inserted in the valve release portion 104. The shaft 102 of the valve 101 and the shaft 105a of the motor 105 may be separate members that are connected by a clutch or the like or may be formed integrally with each other.

When the shaft 105a is rotated by the valve control motor 105, the rotating shaft 102 is rotated correspondingly. As the shaft 102 rotates, the valve 101 is also rotated at 90 degrees from the open state to the closed state.

FIG. 14A is a view showing a release mechanism with the valve open. FIG. 14B is a view showing the release mechanism with the valve closed. As shown in FIG. 14A, the valve release portion 104 has a base 107. The base 107 has a bearing 107a that receives one end 102a of the shaft 102. The shaft 102 integrally has an operating piece 106 such that the operating piece 106 also rotates as the shaft 102 rotates. A spring 108 is interposed between the operating piece 106 and the base 107, and its one end 108a is fixed to the base. An extreme end 108c of its other end 108b is fixed to an end portion 106a of the operating piece 106. When the shaft 102 is rotated by the valve control motor 105, it is shifted from the state shown in FIG. 14A to the state shown in FIG. 14B. As this is done, the operating piece 106 pushes the other end 108b of the spring 108, whereupon the spring 108 is urged toward the state of FIG. 14A in which the valve 101 is open.

If the valve control motor 105 is switched on, the valve 101 is rotated to the closed state (FIGS. 13 and 14B). If the motor 105 is then switched off, the shafts 105a and the 102 are freed, whereupon the operating piece 106 is restored by the urging force of the spring 108 to the state of FIG. 14A in which the valve 101 is open (FIG. 12).

The following is a description of a method of sweeping away the bubbles flowing in the second line 66c into the mixing tank 54. First, the valve control motor 105 is switched on to rotate the valve 101 at 90 degrees from the open state to the closed state. In this state, that portion of the fuel in the second line 66c which is situated on the upstream side (or on the side of the anode cooler 70) is checked by the valve 101. Accordingly, a difference in pressure is caused between the upstream side and the downstream side (on the side of the concentration sensor 88) of the valve 101 in the second line 66c. Thus, as the fuel is checked by the valve 101, the pressure inside the second line 66c on the upstream side becomes higher than that on the downstream side. If the valve control motor 105 is switched off and if the valve 101 is reversely rotated at 90 degrees from the closed state to the open state after the passage of a given time during which the valve 101 is kept in the closed state, the high-pressure fuel on the upstream side is rushed away to the downstream side. This rush sweeps away the bubbles from the second line 66c into the mixing tank 54 at a stroke. Thus, the bubbles can be prevented from collecting in the concentration sensor 88.

According to the fuel cell 10 constructed in this manner, the second line 66c is provided with the valve mechanism 100. Therefore, the bubbles that flow in the second line 66c can be swept away into the mixing tank 54 without staying in the concentration sensor 88, so that the sensor 88 can accurately detect the concentration with stability.

The second line is formed diverging from the first line through which the aqueous methanol solution is refluxed between the mixing tank 54 and the electromotive section 52. This second line is provided with the concentration sensor 88 and the fuel cooling section 87 that cools the methanol solution fed to the concentration sensor. If the temperature of the methanol solution that circulates in the electromotive section exceeds 50°C, therefore, the temperature of the methanol solution fed to concentration sensor 88 can be lowered to a temperature of, for example, 40°C or less at which the concentration sensor can obtain high resolution. Accordingly, the fuel concentration of the aqueous methanol solution can be detected with high resolution by the concentration sensor, so that it can be kept at a desired value. In consequence, the obtained fuel cell can ensure stable power generation.

The present invention is not limited directly to the embodiment described above, and its components may be embodied in modified forms without departing from the scope or spirit of the invention. Further, various inventions may be made by suitably combining a plurality of components described in connection with the foregoing embodiments. For example, some of the components according to the foregoing embodiment may be omitted. Furthermore, components according to different embodiments may be combined as required.

Although the fuel cooling section 87 is formed integrally with the anode cooler 70, according to the embodiment described above, it may alternatively be formed integrally with the cathode cooler 75. Further, the power generation section is composed of the fuel tank 50, mixing tank 54, electromotive section 52, anode cooler 70, and cathode cooler 75 that are arranged in the order named. However, this order of arrangement may be changed variously as required. The fuel cell according to this invention may be also used as a power source for any other electronic devices than the personal computer described herein, such as mobile devices, portable terminals, etc. The type of fuel cell is not limited to the DMFC but may be any other type, such as a PEFC (polymer electrolyte fuel cell).

## Claims

1. A fuel cell **characterized by** comprising:
an electromotive section (52) which generates electric power through a chemical reaction;
a fuel tank (50) which contains a fuel;
a mixing tank (54) in which the fuel supplied from the fuel tank is mixed with water obtained by condensing steam delivered from the electromotive section and an aqueous fuel solution to be supplied to the electromotive section is formed;
a first line (66a) through which the fuel is circulated between the electromotive section and the mixing tank;
a cooler (70) which cools a product from the electromotive section and supplies the product to the mixing tank;
a second line (66c) through which the aqueous fuel solution delivered from the mixing tank is refluxed to the mixing tank through a branch on the first line;
a concentration sensor (88) which is provided in the second line and detects a fuel concentration of the aqueous fuel solution in the second line; and
a valve mechanism (100) which is provided in that part of the second line which is situated between the concentration sensor and the first line and serves to stop a flow of the aqueous fuel solution in the second line.

2. The fuel cell according to claim 1, **characterized in that** the valve mechanism (100) has a valve (101) rotatable between a closed state in which the aqueous fuel solution is checked in the second line (66c) and an open state in which the aqueous fuel solution is allowed to flow.

3. The fuel cell according to claim 2, **characterized in that** the valve mechanism (101) includes a motor (105) which drives the valve (101).

4. The fuel cell according to claim 3, **characterized in that** the motor (105) closes the valve (101) when switched on and drives the valve from the closed state to the open state when switched off.

5. The fuel cell according to claim 1, **characterized in that** the second line (66c) has a line portion in which the aqueous fuel solution flows against the force of gravity, and the concentration sensor (88) is provided on either side of the line portion.

## Patentansprüche

1. Brennstoffzelle, **dadurch gekennzeichnet, dass** sie umfasst:
einen elektromotiven Abschnitt (52), der durch eine chemische Reaktion elektrische Energie erzeugt,
einen Brennstofftank (50), der einen Brennstoff enthält,
einen Mischtank (54), in dem der von dem Brennstofftank zugeführte Brennstoff mit Wasser gemischt wird, das durch Kondensieren von von dem elektromotiven Abschnitt gelieferten Dampf gemischt wird, und in dem eine dem elektromotiven Abschnitt zuzuführende wässerige Brennstofflösung gebildet wird,
eine erste Leitung (66a), durch die der Brennstoff zwischen dem elektromotiven Abschnitt und dem Mischtank zirkuliert wird,
einen Kühler (70), der ein Erzeugnis aus dem elektromotiven Abschnitt kühlt und das Erzeugnis dem Mischtank zuführt,
eine zweite Leitung (66c), durch die die von dem Mischtank gelieferte wässerige Brennstofflösung wieder in den Mischtank über eine Abzweigung der ersten Leitung zurückgeführt wird,
einen Konzentrationssensor (88), der in der zweiten Leitung vorgesehen ist und eine Brennstoffkonzentration der wässerigen Brennstofflösung in der zweiten Leitung erfasst, und
einen Ventilmechanismus (100), der in dem Teil der zweiten Leitung vorgesehen ist, der zwischen dem Konzentrationssensor und der ersten Leitung gelegen ist und dazu dient, ein Strömen der wässerigen Brennstofflösung in der zweiten Leitung zu stoppen.

2. Brennstoffzelle nach Anspruch 1, **dadurch gekennzeichnet, dass** der Ventilmechanismus (100) ein Ventil (101) aufweist, das zwischen einem geschlossenen Zustand, in dem die wässerige Brennstofflösung in der zweiten Leitung (66c) überprüft wird, und einem offenen Zustand, in dem die wässerige Brennstofflösung strömen kann, drehbar ist.

3. Brennstoffzelle nach Anspruch 2, **dadurch gekennzeichnet, dass** der Ventilmechanismus (101) einen Motor (105) aufweist, der das Ventil (101) antreibt.

4. Brennstoffzelle nach Anspruch 3, **dadurch gekennzeichnet, dass** der Motor (105) das Ventil (101) schließt, wenn er eingeschaltet ist, und das Ventil von dem geschlossenen Zustand zum offenen Zustand antreibt, wenn er abgeschaltet wird.

5. Brennstoffzelle nach Anspruch 1, **dadurch gekennzeichnet, dass** die zweite Leitung (66c) einen Leitungsabschnitt aufweist, in dem die wässerige Brennstofflösung gegen die Schwerkraft strömt, und der Konzentrationssensor (88) auf jeder Seite des Leitungsabschnitts vorgesehen ist.

## Revendications

1. Pile à combustible, **caractérisée en ce qu'**elle comprend :
une portion électromotrice (52) qui génère de la puissance électrique par une réaction chimique ;
un réservoir à combustible (50) qui contient un combustible ;
un réservoir de mélange (54) dans lequel le combustible fourni depuis le réservoir à combustible est mélangé avec de l'eau obtenue par condensation de la vapeur fournie par la portion électromotrice et il se forme une solution aqueuse de combustible à fournir à la portion électromotrice ;
une première ligne (66a) via laquelle le combustible est mis en circulation entre la portion électromotrice et le réservoir de mélange ;
un refroidisseur (70) qui refroidit un produit provenant de la portion électromotrice et qui fournit le produit au réservoir de mélange ;
une seconde ligne (66c) via laquelle la solution aqueuse de combustible fournie depuis le réservoir de mélange est renvoyée vers le réservoir de mélange via un branchement sur la première ligne ;
un capteur de concentration (88) qui est prévu dans la seconde ligne et qui détecte une concentration du combustible de la solution aqueuse de combustible dans la seconde ligne ; et
un mécanisme à valve (100) qui est prévu dans cette partie de la seconde ligne qui est située entre le capteur de concentration et la première ligne et qui sert à arrêter un écoulement de la solution aqueuse de combustible dans la seconde ligne.

2. Pile à combustible selon la revendication 1,
**caractérisée en ce que** le mécanisme à valve (100) comprend une valve (101) capable de rotation entre un état fermé dans lequel la solution aqueuse combustible est arrêtée dans la seconde ligne (66c) et un état ouvert dans lequel la solution aqueuse combustible est autorisée à s'écouler.

3. Pile à combustible selon la revendication 2,
**caractérisée en ce que** le mécanisme à valve (101) inclut un moteur (105) qui entraîne la valve (101).

4. Pile à combustible selon la revendication 3,
**caractérisée en ce que** le moteur (105) ferme la valve (101) lorsqu'il est mis en marche et entraîne la valve de l'état fermé à l'état ouvert lorsqu'il est coupé.

5. Pile à combustible selon la revendication 1,
**caractérisée en ce que** la seconde ligne (66c) comprend une portion de ligne dans laquelle la solution aqueuse combustible s'écoule à l'encontre de la force de la gravité, et le capteur de concentration (88) est prévu sur chaque côté de la portion de ligne.
